(19) **Europäisches Patentamt**
**European Patent Office**
**Office européen des brevets**

(11) Veröffentlichungsnummer: **0 425 468 A1**

(12) # EUROPÄISCHE PATENTANMELDUNG

(21) Anmeldenummer: **90890100.2**

(22) Anmeldetag: **04.04.90**

(51) Int. Cl.5: **B01D 53/34**

(30) Priorität: **25.10.89 AT 2471/89**
**31.01.90 AT 207/90**

(43) Veröffentlichungstag der Anmeldung:
**02.05.91 Patentblatt 91/18**

(84) Benannte Vertragsstaaten:
**AT BE CH DE DK ES FR GB GR IT LI LU NL SE**

(71) Anmelder: **Schmid, Peter J., Ing.**
**Neustiftgasse 93**
**A-1070 Wien(JP)**

(72) Erfinder: **Schmid, Peter J., Ing.**
**Neustiftgasse 93**
**A-1070 Wien(JP)**

(74) Vertreter: **Kliment, Peter, Dipl.-Ing. Mag.-jur.**
**Singerstrasse 8/3/8**
**A-1010 Wien(AT)**

(54) **Verfahren zur Entfernung von Stickoxyden aus Gasen.**

(57) Verfahren zur Entfernung von Stickoxiden aus Gasen bei dem zunächst das Molverhältnis NO zu $NO_2$ in diesem Gas auf 1 eingestellt wird und daraufhin die Stickoxide in einer wässerigen Ammoniaklösung absorbiert werden, wobei Ammonnitrat gebildet wird. Um das gewünschte Molverhältnis in einfacher Weise zu erreichen, ist vorgesehen, daß zur Einstellung des Molverhältnisses NO zu $NO_2$ in geregelter Weise $NO_2$ in das Gas eingedüst wird, das aus der Reaktion des Ammonnitrats mit einer starken Säure gebildet wird.

EP 0 425 468 A1

Die Erfindung betrifft ein Verfahren zur Entfernung von Stickoxiden aus Gasen bei dem zunächst das Molverhältnis NO zu NO₂ in diesem Gas auf 1 eingestellt wird und daraufhin die Stickoxide in einer wässerigen Ammoniaklösung absorbiert werden, wobei Ammoniumnitrat gebildet wird.

Aus der US-PS 3 453 071 ist ein Verfahren zur Entfernung von Stickoxiden aus Abgasen bekannt, das darin besteht, das zu reinigende Gas in eine wässerige Lösung aus Ammoniak und Ammoniumnitrat einzuführen. In einer solchen Lösung setzen sich die Stickoxide mit Ammoniak zu Ammoniumnitrit um, das im Anschluß daran zu Ammoniumnitrat oxidiert wird. Bei einer solchen Reaktion ist es erforderlich, daß Stickstoffmonoxid und Stickstoffdioxid in einem Molverhältnis von 1 vorliegen. In der US-PS 3 453 071 wird ferner ausgesagt, daß man dieses gewünschte Molverhältnis auf verschiedene Arten erreichen kann, so z. B. durch gezielte Zufuhr des im Unterschuß vorhandenen Stickoxides oder durch Oxidation von Stickstoffmonoxid zum Dioxid oder umgekehrt durch Reduktion von Stickstoffdioxid zum Monoxid.

In der Praxis zeigt sich, daß Abgase aus Verbrennungsprozessen zumeist relativ große Anteile an Stickstoffmonoxid enthalten, während im Vergleich dazu der Anteil an Stickstoffdioxid gering ist. Um nun das gewünschte Molverhältnis von 1 zu erreichen, müßte man entweder zusätzliches Stickstoffdioxid in das Abgas einbringen oder einen Teil des Monoxids zum Dioxid oxidieren. Wegen der großen erforderlichen Mengen an Stickstoffdioxid hat sich der erste Weg in der Praxis als nicht gangbar herausgestellt. Aus diesem Grunde wird nun bei praktisch ausgeführten Anlagen Ozon in das Rauchgas eingebracht, dessen reaktiver Sauerstoff einen Teil der Stickstoffmonoxidmoleküle zu Stickstoffdioxid oxidiert. Durch genaue Regelung der Ozonzugabe wird dabei das gewünschte Molverhältnis Stickstoffmonoxid zu -dioxid eingestellt. Jedoch auch die Herstellung von Ozon ist aufwendig und verursacht einen beträchtlichen Energieeinsatz.

Aufgabe der vorliegenden Erfindung ist es, diese Nachteile zu vermeiden und ein Verfahren zu schaffen, bei dem das Molverhältnis von Stickstoffmonoxid zu -dioxid einfach und in energetisch günstiger Weise eingestellt werden kann. Zur Einstellung des Molverhältnisses NO zu NO₂ wird in geregelter Weise No in das Gas eingedüst, das aus der Reaktion des Ammonnitrats mit einer starken Säure gebildet wird.

Erfindungsgemäß ist daher vorgesehen, daß zur Einstellung des Molverhältnisses No zu NO₂ in geregelter Weise NO₂ in das Gas eingedüst wird, das aus der Reaktion des Ammonnitrats mit einer starken Säure gebildet wird.

Das für das Verfahren notwendige Stickstoffdioxid wird also auf einfache Weise direkt aus dem Endprodukt des Verfahrens, nämlich dem Ammoniumnitrat hergestellt. Dieser Prozeß ist einfach und kann in einem Schritt in einem Reaktor durchgeführt werden.

Besonders günstig ist es, wenn als starke Säure Salzsäure verwendet wird. In diesem Fall kann man von einer nahezu 100%igen Ausbeute ausgehen.

Nach einer anderen vorteilhaften Ausführungsvariante wird als starke Säure Schwefelsäure verwendet. Dies hat den Vorteil, daß als Endprodukt des Verfahrens Ammoniumsulfat entsteht, das einen wertvollen Rohstoff für weitere Prozesse darstellt.

Beispiel 1:

In einer Füllkörperkolonne wird das zu reinigende Gas von unten nach oben durchströmen gelassen. In dieser Füllkörperkolonne wird mittels Kalkmilch ein Entschwefelungsschritt durchgeführt, der an sich bekannt ist und hier nicht näher beschrieben wird. Nach dieser Entschwefelungsstufe wird NO₂ in die Kolonne eingeblasen, um ein Molverhältnis NO zu NO₂ von 1 herzustellen. Das so behandelte Gas wird im Gegenstrom zu einer wässerigen Lösung aus Ammoniak und gegebenenfalls Ammonnitrat geführt. Im Inneren dieser Kolonne spielt sich dabei im wesentlichen folgende chemische Reaktion ab:

NO + NO₂ + 2 NH₃ + H₂O-----> 2 NH₄ NO₂     - (1)

Das so erhaltene Ammonnitrit wird weiters zu Ammonnitrat oxidiert:

2 NH₄ NO₂ + O₂----->2 NH₄ NO₃     (2)

Das für das Verfahren notwendige NO₂ wird aus der Zerlegung des Ammonnitrats mit Hilfe von Salzsäure gewonnen. Die Hauptreaktion, die sich dabei abspielt kann man folgendermaßen anschreiben:

4 NH₄ NO₃ + 2 HCl + 1/2 O₂-----> 2 NH₄ Cl + 2 NH₄ NO₃ + 2 NO₂ + H₂O     (3)

Diese Reaktion wird in einem Generator aus Titan mit Teflonauskleidung durchgeführt. Die Verweilzeit im Reaktor beträgt ca. 10 Minuten.

Zum Anfahren der Anlage wird in die Kolonne wie bisher Ozon eingedüst. Sobald das erste Ammonnitrat vorliegt und Stickstoffdioxid in ausreichender Menge gewonnen wird, kann von der Ozoneindüsung auf NO₂ Eindüsung umgeschaltet werden. Wenn mehrere Reaktionstürme vorhanden sind, braucht nur ein einziger davon eine Ozonanlage aufweisen, während die anderen schrittweise mit dem NO₂ der jeweils vorhergehenden Anlage in Betrieb genommen werden können.

Bei einem konkret ausgeführten Projekt wurde eine Reinigung von $2,17 \times 10^6$ Nm³ Abgas durchgeführt, welche mit 500 mg/Nm³ NO beladen waren. Andere Stickoxide lagen nur in vernachlässigbarer Menge vor. Bei diesem Durchsatz von 1085 kg/h NO wurden 5204 kg/h 50 %iger Ammoniumnitratlösung produziert. Um die erforderliche Menge NO₂ herzustellen, wurde 1170 kg/h HCl eingesetzt.

Beispiel 2:

In einer Füllkörperkolonne wird das zu reinigende Gas von unten nach oben durchströmen gelassen. In dieser Füllkörperkolonne wird mittels Kalkmilch ein Entschwefelungsschritt durchgeführt, der an sich bekannt ist und hier nicht näher beschrieben wird. Nach dieser Entschwefelungsstufe wird NO₂ in die Kolonne eingeblasen, ein Molverhältnis NO zu NO₂ von 1 herzustellen. Das so behandelte Gas wird im Gegenstrom zu einer wässerigen Lösung aus Ammoniak und gegebenenfalls Ammonnitrat geführt. Im Inneren dieser Kolonne spielt sich dabei im wesentlichen folgende chemische Reaktion ab:

$$NO + NO_2 + 2 NH_3 \cdot H_2O \longrightarrow 2 NH_4 NO_2 \qquad (1)$$

Das so erhaltene Ammonnitrit wird weiters zu Ammonnitrat oxidiert:

$$2 NH_4 NO_2 \cdot O_2 \longrightarrow 2 NH_4 NO_3 \qquad (2)$$

Das für das Verfahren notwendige NO₂ wird aus der Zerlegung des Ammonnitrats mit Hilfe von Schefelsäure gewonnen. Die Hauptreaktionen, die sich dabei abspielen, kann man folgendermaßen anschreiben:

$$2 NH_4NO_3 + H_2SO_4 \longrightarrow 2 HNO_3 + (NH_4)_2SO_4 \qquad (3)$$
$$2 NH_4NO_2 + H_2SO_4 \longrightarrow 2 HNO_2 + (NH_4)_2SO_4 \qquad (4)$$
$$HNO_3 + HNO_2 + H_2O \longrightarrow 2 NO_2 + 2 H_2O \qquad (5)$$

Diese Reaktion wird in einem Reaktor aus austenitischem Stahl durchgeführt, der innen mit einer Emailschicht verkleidet ist. Die Verweilzeit im Reaktor beträgt ca. 10 Minuten.

Zum Anfahren der Anlage wird aus einem Pufferspeicher Ammoniumnitrat in den Reaktor eingeführt. Das entstehnde Stickstoffdioxid wird in die Kolonne geleitet. Im weiteren betrieb wird das erforderliche Ammoniumnitrat, das mit Ammoniumnitrit gemischt ist, aus der Kolonne entnommen.

Im vorliegenden Beispiel wurden mit 4358 kg 50% igar Ammoniumnitrat/nitritlösung unter Einsatz von 3338 kg 40% iger Schwefelsäure 1253 kg NO₂ gebilet. Dabei fielen 1798 kg Ammoniumsulfat an.

Mit dem erfindungsgemäßen Verfahren ist eine äußerst wirtschaftliche Entsorgung von Abgasen, die mit Stickoxiden beladen sind, möglich.

## Ansprüche

1. Verfahren zur Entfernung von Stickoxiden aus Gasen bei dem zunächst das Molverhältnis NO zu NO₂ in diesem Gas auf eins eingestellt wird und daraufhin die Stickoxide in einer wässerigen Ammoniaklösung absorbiert werden, wobei Ammonnitrat gebildet wird, dadurch gekennzeichnet, daß zur Einstellung des Molverhältnisses NO zu NO₂ in geregelter Weise NO₂ in das Gas eingedüst wird, das aus der Reaktion des Ammonnitrats mit einer starken Säure gebildet wird.

2. Verfahren nach Anspruch 1, dadurch gekennzeichnet, daß als starke Säure Salzsäure verwendet wird.

3. Verfahren nach Anspruch 1, dadurch gekennzeichnet, daß als starke Säure Schwefelsäure verwendet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3632766 (DORNIER SYSTEM GMBH) <br> * Anspruch 1 * <br> --- | 1 | B01D53/34 |
| A | DE-A-3233316 (BUCKAU-WALTHER AG) <br> * Ansprüche 1-5 * <br> --- | 1, 3 | |
| A | US-A-4663135 (R.MILLER) <br> * Anspruch 1 * <br> --- | 1 | |
| A,D | US-A-3453071 (K.SCHMITT ET AL.) <br> * das ganze Dokument * <br> ----- | 1 | |

RECHERCHIERTE
SACHGEBIETE (Int. Cl.5)

B01D

Der vorliegende Recherchenbericht wurde für alle Patentansprüche erstellt

| Recherchenort | Abschlußdatum der Recherche | Prüfer |
|---|---|---|
| BERLIN | 03 DEZEMBER 1990 | BERTRAM H.E.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)